# FASCICULE DE BREVET EUROPEEN

(11) **EP 3 661 707 B1**
(45) Date de publication et mention de la délivrance du brevet: **30.08.2023**
(21) Numéro de dépôt: 18765948.7
(22) Date de dépôt: 27.07.2018
(51) Int. Cl.: B25J 19/00, B25J 19/06, B25J 15/00

(54) **DISPOSITIF EFFECTEUR COMPRENANT UN DISPOSITIF DE PROTECTION DÉPLOYABLE OU RÉTRACTABLE PAR FLEXION**
EFFEKTORVORRICHTUNG MIT EINER DURCH BIEGEN AUSZIEHBAREN ODER ZURÜCKZIEHBAREN SCHUTZVORRICHTUNG
EFFECTOR DEVICE COMPRISING A PROTECTIVE DEVICE THAT IS EXTENDABLE OR RETRACTABLE BY BENDING

(30) Priorité: 04.08.2017 FR 1757548
(43) Date de publication de la demande: 10.06.2020
(73) Titulaire: Compagnie Générale des Etablissements Michelin, 63000 Clermont-Ferrand (FR)
(72) Inventeur: DETTORRE, Jean-Marie, 63040 Clermont Ferrand Cedex 9 (FR); DRAGO, Frédéric, 63040 Clermont Ferrand Cedex 9 (FR); TRABATTONI, Thomas, 63040 Clermont Ferrand Cedex 9 (FR)
(74) Mandataire: Roussy, Delphine
(86) Numéro de dépôt international: PCT/FR2018/051946
(87) Numéro de publication internationale: WO 2019/025711

(56) Documents cités:
- DE-A1-102014 221 645
- DE-A1-102015 216 665
- DE-U1-202015 100 913
- WEITSCHAT ROMAN ET AL: "End-effector airbags to accelerate human-robot collaboration", 2017 IEEE INTERNATIONAL CONFERENCE ON ROBOTICS AND AUTOMATION (ICRA), IEEE, 29 mai 2017 (2017-05-29), pages 2279-2284, XP033127004, DOI: 10.1109/ICRA.2017.7989262

## Description

La présente invention se situe dans le domaine de la robotique industrielle et plus particulièrement dans le domaine de la robotique collaborative.

Un robot industriel est un dispositif automatisé permettant de réaliser des tâches diverses à l'aide d'un outil généralement appelé effecteur. Un robot industriel peut comprendre un bras manipulateur capable de déplacer et d'orienter suivant plusieurs degrés de liberté l'effecteur ou un objet, si l'effecteur est un organe de manipulation.

Un tel robot présente généralement des caractéristiques dynamiques élevées, ou autrement dit une aptitude à manipuler des charges de quelques kilogrammes à plusieurs centaines de kilogrammes à des vitesses jusqu'à 6 m.s⁻¹. Il nécessite donc d'être entouré par une enceinte de sécurité pour permettre au robot de se déplacer sans risque de collision avec un opérateur.

Par robot collaboratif, on entend un robot industriel installé dans un espace de travail qui est partagé avec un opérateur, donc sans enceinte de sécurité interposée. Par exemple, un robot collaboratif remplace ou assiste un opérateur dans le maniement de charges de manière répétitive ou dans l'accomplissement de tâches fatigantes et/ou susceptibles d'entrainer l'apparition de troubles musculo-squelettiques.

L'espace de travail du robot collaboratif étant partagé avec un opérateur, le risque de collision entre le robot et l'opérateur est réel. On cherche alors à réduire la gravité des conséquences d'une collision et plus particulièrement le risque de blessure. A cette fin, les robots collaboratifs présentent des caractéristiques dynamiques faibles, à savoir une aptitude à manipuler des charges de quelques kilogrammes à des vitesses jusqu'à 1 m.s⁻¹. Ainsi, les énergies de collision admises varient de l'ordre de 0,2 J à 2,5 J. Enfin, ils sont conçus pour s'immobiliser en cas de collision avec l'opérateur, notamment en cas de détection d'une brusque variation des efforts fournis par les actionneurs du robot.

Cependant, même lorsque l'énergie cinétique du robot est faible, si l'effecteur du robot ou l'objet manié comporte, par exemple, des arêtes tranchantes, une collision avec l'opérateur présente toujours un risque de blessure.

La demande DE 102008004037 décrit une structure grillagée constituant un boitier de protection entourant l'effecteur. Le boitier peut protéger un opérateur d'une collision à faible vitesse avec l'effecteur. Cependant, le boitier est fixe par rapport à l'effecteur lorsque le robot effectue des tâches ou se déplace. Autrement dit, l'organe effecteur est obligatoirement un outil exerçant un effet à distance tel un capteur optique, ce qui restreint les possibilités d'application du boitier de protection.

Une solution à ce problème a été apportée par la demande DE 102012217764 qui décrit une structure de protection d'un outil mobile sous l'effet d'un actionneur entre une position dans laquelle l'outil est couvert et une position dans laquelle l'outil est libéré. Ainsi, l'opérateur est protégé d'une collision avec l'outil lorsque le robot effectue des tâches. Cependant, la structure de protection couvrant l'outil est rigide car elle est prévue pour protéger l'outil d'une collision avec un élément quelconque de son environnement, le robot présentant des caractéristiques dynamiques élevées. Par conséquent, une collision entre la structure de protection et l'opérateur présente encore un risque de blessure.

Par ailleurs, la publication intitulée « End-effector airbags to accelerate human-robot collaboration », publiée dans le document « 2017 IEEE International Conférence on Robotics and Automation (ICRA) » le 29/05/2017, divulgue une structure de protection d'un outil mobile constituée d'une membrane gonflable apte à se déployer autour de l'outil à la manière d'un airbag.

Les demandes DE102015216665, DE202015100913 et DE102014221645 décrivent également des dispositifs de protection d'effecteurs mobiles.

Un objectif de l'invention est de remédier aux inconvénients des documents précités et d'apporter une solution originale pour permettre de supprimer le risque de collision directe entre l'effecteur d'un robot collaboratif et un opérateur et réduire le risque de blessure en cas de collision avec un dispositif de protection.

Cet objectif est atteint par l'invention qui propose un dispositif effecteur apte à être déplacé ou orienté par un système automatisé tel un bras manipulateur, le dispositif effecteur comprenant une base, un effecteur s'étendant depuis la base le long d'un axe longitudinal, et un dispositif de protection passant au moyen d'un actionneur d'un état rétracté à un état déployé autour de l'effecteur et vice versa, le dispositif de protection étant fixé sur ladite base de manière à être déplacé et/ou orienté avec l'effecteur, le dispositif effecteur étant **caractérisé en ce que** le dispositif de protection comprend une armature flexible, le dispositif de protection passant sous l'effet de la flexion de l'armature d'un état rétracté à un état déployé autour de l'effecteur ou, d'un état déployé autour de l'effecteur à un état rétracté, et **en ce que** l'actionneur coopère avec l'armature de telle sorte que, lorsque l'actionneur passe d'un premier à un second état, l'armature est davantage fléchie, et lorsque l'actionneur passe du second au premier état, l'armature est moins fléchie.

Ainsi, l'armature flexible peut envelopper l'effecteur lorsque l'on souhaite protéger l'opérateur d'une collision avec l'effecteur. En effet, lors d'une collision entre l'opérateur et l'armature flexible, l'énergie de la collision est absorbée progressivement par l'armature flexible qui se déforme élastiquement. Ainsi, le dispositif effecteur par l'intermédiaire du dispositif de protection, ne transmet pas brutalement son énergie cinétique à l'opérateur, contrairement à la structure rigide de l'état de la technique.

Avantageusement, l'armature comprend au moins trois rayons flexibles qui s'étendent radialement depuis l'axe, lesdits rayons comportant une face intérieure et une face extérieure, et qui coopèrent avec l'actionneur de telle sorte que, lorsque l'actionneur passe d'un premier à un second état, les rayons sont davantage fléchis, et lorsque l'actionneur passe du second au premier état, les rayons sont moins fléchis.

Une armature comprenant des rayons est une construction légère afin de réaliser un dispositif de protection déployable et rétractable.

De préférence, l'actionneur prend la forme d'un actionneur simple effet. L'actionneur fournit un travail pour fléchir l'armature lorsqu'il passe du premier au second état, et plus précisément, lorsqu'il fléchit davantage l'armature. L'armature étant élastique, l'énergie potentielle élastique qu'elle a accumulée lors de sa flexion lui permet de revenir dans sa position initiale et de ramener l'actionneur à son premier état. Une telle construction permet de simplifier le dispositif de protection.

De préférence, le dispositif de protection est à l'état déployé lorsque les rayons sont davantage courbés autour de l'effecteur. Les rayons courbés enveloppent l'effecteur en délimitant un volume de protection important.

Dans une première variante de l'armature, les rayons sont davantage courbés autour de l'effecteur lorsqu'ils sont davantage fléchis, et moins courbés autour de l'effecteur lorsqu'ils sont moins fléchis.

L'armature fléchie sous l'effet de l'actionneur peut être vue comme une armature présentant une précontrainte. En cas de collision avec un opérateur, l'armature fléchie ne se déforme pas tant que les forces en jeux dans la collision sont inférieures à la précontrainte dans l'armature. Ainsi, le bras manipulateur est plus sensible aux efforts résultants de la collision notamment en cas de brusque variation des efforts fournis par les actionneurs du robot. Quand les efforts en jeux dans la collision sont supérieurs à la précontrainte, l'armature flexible fléchit davantage et atténue la brutalité du choc.

Dans une deuxième variante de l'armature, les rayons sont moins courbés autour de l'effecteur lorsqu'ils sont davantage fléchis, et davantage courbés autour de l'effecteur lorsqu'ils sont moins fléchis.

Ainsi, en cas de perte des utilités, par exemple par arrachement du faisceau alimentant l'effecteur, l'actionneur du dispositif de sécurité n'est plus apte à se maintenir en état et n'entraine plus la flexion de l'armature. Le dispositif de protection est alors déployé. Ainsi, le dispositif effecteur se met en situation sécuritaire stable. En fléchissant, les rayons se courbent et enveloppent le pourtour de l'effecteur en délimitant un volume de protection important.

Dans une première variante de l'actionneur, l'actionneur comprend une vessie de forme torique, apte à être remplie par un fluide, ladite vessie reliant les extrémités libres des rayons, ladite vessie coopérant avec lesdits rayons de telle sorte que, lorsque la vessie est davantage remplie, les rayons sont davantage fléchis, et lorsque la vessie est moins remplie, les rayons sont moins fléchis.

La vessie torique rigidifiée exerce une contrainte sur l'extrémité libre des rayons qui fléchissent. La vessie se déplace avec l'extrémité libre des rayons. Une telle construction est simple. La vessie est d'une part utilisée en tant qu'actionneur et d'autre part utilisée en tant qu'amortisseur de choc. En effet, la vessie remplie est suffisamment souple pour atténuer la brutalité d'une collision. Ainsi, un opérateur est protégé d'une collision sur tout le pourtour de l'effecteur.

Dans une deuxième variante de l'actionneur, l'actionneur comprend une pluralité de vessies, aptes à être remplies par un fluide, une vessie étant fixée le long de la face extérieure d'un rayon, ladite vessie coopérant avec ledit rayon de telle sorte que lorsque la vessie est davantage remplie, elle est davantage rigide et courbée et le rayon est davantage fléchi, et lorsque la vessie est moins remplie, elle est davantage souple et droite et le rayon est moins fléchi.

Les vessies rigidifiées mettent en tension la face extérieure des rayons qui fléchissent. Une telle construction permet de couvrir l'ensemble des rayons de l'armature par des vessies. Ainsi, les vessies sont mieux réparties sur le dispositif de protection, ce qui améliore l'efficacité du dispositif protection. Ce principe d'actionnement présente également l'avantage de fléchir l'armature avec une amplitude importante.

Dans une troisième variante de l'actionneur, l'actionneur comprend une pluralité de vessies, aptes à être remplies par un fluide, une vessie étant fixée le long de la face intérieure d'un rayon, ladite vessie coopérant avec ledit rayon de telle sorte que lorsque la vessie est davantage remplie, elle est davantage rigide et droite et le rayon est davantage fléchi, et lorsque la vessie est moins remplie, elle est davantage souple et courbée et le rayon est moins fléchi.

De préférence, la vessie comprend au moins deux parties. Une première partie de la vessie est réalisée dans un matériau extensible. Une vessie réalisée dans un matériau extensible permet d'augmenter l'amplitude de l'action de la vessie sur l'armature, et donc, la flexion de l'armature, ce qui confère au dispositif de protection la possibilité de s'adapter plus largement aux dimensions de l'effecteur. Une deuxième partie de la vessie est réalisée dans un matériau sensiblement inextensible. Ainsi, seule la première partie de la vessie est déformée lorsque la vessie est gonflée. L'action de la vessie est localisée et pilotée lors de son remplissage. Sa coopération avec l'armature est par conséquent plus efficace.

Les vessies rigidifiées mettent en compression la face intérieure des rayons qui fléchissent. Un tel principe de construction est compatible avec un dispositif effecteur apte à se mettre en situation sécuritaire stable. Les vessies sont mieux réparties sur le dispositif de protection, ce qui améliore l'efficacité du dispositif de protection. Ce principe d'actionnement présente également l'avantage de fléchir l'armature avec une amplitude importante.

Dans une quatrième variante de l'actionneur, l'actionneur comprend un élément filaire reliant les extrémités libres des rayons, ledit élément filaire coopérant avec lesdits rayons de telle sorte que, lorsque l'élément filaire est davantage tendu, les rayons sont davantage fléchis, et lorsque l'élément filaire est moins tendu, les rayons sont moins fléchis.

L'élément filaire exerce une contrainte sur l'extrémité libre des rayons qui fléchissent. Un tel principe d'actionnement est de mise en oeuvre simple et présente également l'avantage de fléchir l'armature avec une amplitude importante.

De préférence, les rayons sont sensiblement courbés autour de l'effecteur lorsque le dispositif de protection est à l'état rétracté. Ainsi, l'armature se déploie toujours autour de l'effecteur.

Dans une cinquième variante de l'actionneur, l'actionneur comprend une pluralité d'éléments filaires, un élément filaire étant fixé à une de ses extrémités à l'extrémité libre d'un rayon et coulissant le long de la face extérieure dudit rayon, ledit élément filaire coopérant avec ledit rayon de telle sorte que, lorsque l'élément filaire est davantage tendu, le rayon est davantage fléchi, et lorsque l'élément filaire est moins tendu, le rayon est moins fléchi.

Les éléments filaires mettent en compression la face extérieure des rayons qui fléchissent. Un tel principe de construction est de mise en oeuvre simple et est compatible avec un dispositif effecteur apte à se mettre en situation sécuritaire stable.

Dans une sixième variante de l'actionneur, l'actionneur comprend une pluralité d'éléments filaires, un élément filaire étant fixé à une de ses extrémités à l'extrémité libre d'un rayon et coulissant le long de la face intérieure dudit rayon, ledit élément filaire coopérant avec ledit rayon de telle sorte que, lorsque l'élément filaire est davantage tendu, le rayon est davantage fléchi, et lorsque l'élément filaire est moins tendu, le rayon est moins fléchi.

Les éléments filaires mettent en compression la face extérieure des rayons qui fléchissent. Un tel principe de construction est de mise en oeuvre simple et est compatible avec un dispositif effecteur apte à se mettre en situation sécuritaire stable.

De préférence, le dispositif de protection comprend une membrane extensible solidaire de l'armature et qui enveloppe l'armature. Une membrane extensible permet de combler les interstices entre les rayons de l'armature et ainsi d'améliorer l'efficacité du dispositif de protection.

L'invention sera mieux comprise grâce à la suite de la description, qui s'appuie sur les figures suivantes :
- la figure 1 est une vue en perspective d'un dispositif effecteur, illustrant le dispositif de protection à l'état déployé selon une première variante de l'actionneur et de l'armature ;
- la figure 2 est une vue en perspective du dispositif effecteur de la figure 1 à l'état rétracté ;
- la figure 3a est une vue en perspective d'un dispositif effecteur, illustrant le dispositif de protection à l'état déployé selon une deuxième variante de l'armature ;
- la figure 3b est une vue en perspective du dispositif effecteur de la figure 3a à l'état rétracté ;
- la figure 4a est une vue en perspective d'un dispositif effecteur, illustrant le dispositif de protection à l'état déployé selon une deuxième variante de l'actionneur et la première variante de l'armature ;
- la figure 4b est une vue en perspective du dispositif effecteur de la figure 4a à l'état rétracté ;
- la figure 5a est une vue en perspective d'un dispositif effecteur, illustrant le dispositif de protection à l'état déployé selon une troisième variante de l'actionneur et la première variante de l'armature ;
- la figure 5b est une vue en perspective du dispositif effecteur de la figure 5a à l'état rétracté ;
- la figure 6a est une vue en coupe radiale d'un dispositif effecteur, illustrant le dispositif de protection à l'état déployé selon une quatrième variante de l'actionneur et la première variante de l'armature ;
- la figure 6b est une vue en coupe radiale du dispositif effecteur de la figure 6a à l'état rétracté ;

Sur les différentes figures, les éléments identiques ou similaires portent la même référence. Leur description n'est donc pas systématiquement reprise.

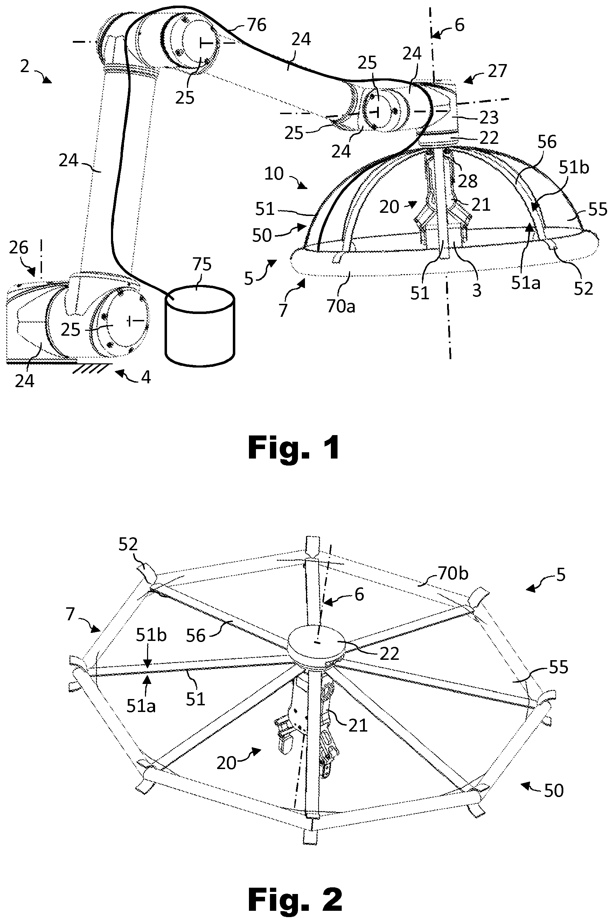

Comme illustré à la figure 1, l'invention est relative à un dispositif 10 effecteur. Le dispositif 10 comprend un effecteur 20 qui est déplacé et orienté par un robot industriel et plus précisément, par un bras manipulateur 2 anthropomorphe à six axes.

L'effecteur peut être un outil ou, dans une application qui intéresse plus particulièrement les demanderesses, une pince 21 de préhension d'un objet 3.

Le bras manipulateur employé est conçu pour effectuer des tâches en collaboration avec un opérateur et peut donc s'immobiliser lorsqu'il est soumis à un effort résistant lors de ses déplacements, par exemple lors d'une collision avec l'opérateur. A cette fin, le dispositif effecteur peut être équipé de moyens mesurant l'effort fourni par son ou ses actionneurs. Le bras manipulateur 2 et/ou l'effecteur 20 peuvent également être équipés de moyen de détection de collision avec un objet ou un opérateur. Ces moyens de détection prennent la forme de capteurs de proximité, par exemple de type capacitif, permettant de préférence la détection d'objets non métalliques, et donc d'un opérateur.

Le bras manipulateur 2 comporte une série de cinq segments 24 de longueur variable, articulés entre eux par quatre articulations 25. A titre d'exemple, une articulation est réalisée par un axe et deux pivots et actionnée par un moteur électrique. Une première extrémité du bras 2 est montée mobile à pivotement par rapport à un support 4 fixe par l'intermédiaire d'une première articulation 26 et une seconde extrémité, appelée embase 23, est montée mobile à pivotement avec le dispositif effecteur par l'intermédiaire d'une dernière articulation 27. En fonction de l'application du dispositif effecteur et de l'agencement de l'espace de travail, le robot industriel peut prendre d'autres architectures avec plus ou moins d'axes de mobilité.

Le dispositif effecteur comprend une base 22 dans laquelle est encastré l'axe de la dernière articulation. L'embase 23 et la base 22 sont en appui perpendiculairement à l'axe de la dernière articulation 27 par des faces planes. La base réalise donc un pivot de la dernière articulation.

L'effecteur 20 s'étend depuis la base 22 jusqu'à une extrémité libre, le long d'un axe 6 longitudinal colinéaire avec l'axe de la dernière articulation 27. L'effecteur est fixé sur la base par l'intermédiaire d'une patte 28 de fixation en forme de U. La patte est assemblée à la base par plusieurs vis, par sa partie en creux. Les parois latérales de la patte sont accouplées avec la pince 21.

Les énergies nécessaires au fonctionnement du dispositif effecteur, tel l'air comprimé ou l'électricité, sont apportées par un faisceau 76 pneumatique et/ou électrique.

Le dispositif 10 effecteur comprend donc la base 22, l'effecteur 20, et un dispositif 5 de protection. Le dispositif de protection est fixé sur la base par intercalage entre la patte 28 et la base 22. Ainsi, il est déplacé et/ou orienté avec l'effecteur.

Le dispositif 5 de protection est à symétrie de révolution d'axe central, l'axe central étant colinéaire avec l'axe 6 longitudinal de l'effecteur 20. Le dispositif de protection comprend une face intérieure se situant du côté de l'effecteur et une face extérieure se situant du côté opposée à la face intérieure.

Le fonctionnement du dispositif effecteur comprend deux phases. Dans une première phase, le bras manipulateur se déplace amplement dans l'espace de travail partagé avec l'opérateur, entre une zone de départ et une zone d'arrivée. Pendant le déplacement, l'axe 6 de l'effecteur est généralement vertical et orienté vers le bas et les déplacements de l'effecteur se font principalement dans le plan horizontal et les déplacements verticaux, principalement à l'aplomb des zones de départ ou d'arrivée. La pince 2 de préhension, chargée ou non d'un objet 3, n'est alors pas susceptible de changer d'état. Lors de cette phase, une collision entre l'effecteur et l'opérateur représente une éventualité compte tenu des déplacements amples du bras manipulateur. Le dispositif 5 de protection est donc à l'état déployé autour de l'effecteur. Ainsi, le dispositif de protection enveloppe l'effecteur afin de protéger l'opérateur.

Dans une seconde phase, le bras manipulateur effectue des tâches dans une zone de travail réduite. L'amplitude des mouvements est faible et une collision avec l'opérateur dans le plan horizontal est peu probable ou ne présente pas de risque de blessure. Ainsi, il n'est plus nécessaire que le dispositif 5 de protection enveloppe l'effecteur 20. Durant la seconde phase, le dispositif de protection est donc à l'état rétracté.

Le dispositif de protection passe au moyen d'un actionneur d'un état rétracté à un état déployé autour de l'effecteur et vice versa. Déployé, le dispositif de protection définit une enveloppe de protection de forme généralement sphérique ou, de préférence, hémisphérique comme l'illustre la figure 1. Ainsi, compte tenu de l'orientation de l'effecteur, le dispositif de protection protège principalement l'opérateur du pourtour de l'effecteur. Rétracté, le dispositif de protection définit sensiblement un plan.

Selon l'invention, le dispositif 5 de protection comprend une armature 50 flexible, le dispositif de protection passant sous l'effet de la flexion de l'armature d'un état rétracté à un état déployé autour de l'effecteur 20 ou, d'un état déployé autour de l'effecteur à un état rétracté. L'actionneur 7 coopère avec l'armature 50 de telle sorte que, lorsque l'actionneur passe d'un premier à un second état, l'armature est davantage fléchie, et lorsque l'actionneur passe du second au premier état, l'armature est moins fléchie. Ainsi, lorsque le dispositif 5 de protection est à l'état déployé, la forme de l'armature définie une enveloppe de protection.

L'actionneur 7 prend la forme d'un actionneur simple effet, l'actionneur comportant de préférence un pré-actionneur et un accumulateur d'énergie potentielle élastique, tel un ressort, de telle sorte que lorsque le pré-actionneur passe d'un premier à un second état, l'actionneur passe du premier au second état, et lorsque le pré-actionneur passe du second au premier état, ledit accumulateur entraine le passage de l'actionneur du second au premier état. De préférence, l'accumulateur d'énergie potentielle est réalisé par l'armature 50 flexible.

L'actionneur 7 peut également être un actionneur double effet. A titre d'exemple, la vidange de la ou des vessies afin de moins fléchir l'armature 50 peut être assurée par une pompe. La réactivité du dispositif est ainsi améliorée.

L'armature 50 comprend au moins trois rayons 51 flexibles qui s'étendent radialement depuis l'axe 6 et qui coopèrent avec l'actionneur 7 de telle sorte que, lorsque l'actionneur passe d'un premier à un second état, les rayons sont davantage fléchis, et lorsque l'actionneur passe du second au premier état, les rayons sont moins fléchis. En effet, trois rayons sont suffisants pour réaliser une enveloppe de protection autour de l'effecteur. De préférence, l'armature 50, illustrée aux différentes figures, comporte huit rayons afin de réaliser une enveloppe de protection sensiblement plus importante. Les rayons sont équidistants angulairement pour permettre un déploiement uniforme du dispositif de protection sur le pourtour de l'effecteur.

Dans une première variante de l'armature illustrée aux figures 1 et 2, un rayon 51 est une lamelle 56 dont l'épaisseur varie de quelques dixièmes de millimètres à 1 mm. A titre d'exemple, la lamelle est réalisée en fibre de carbone.

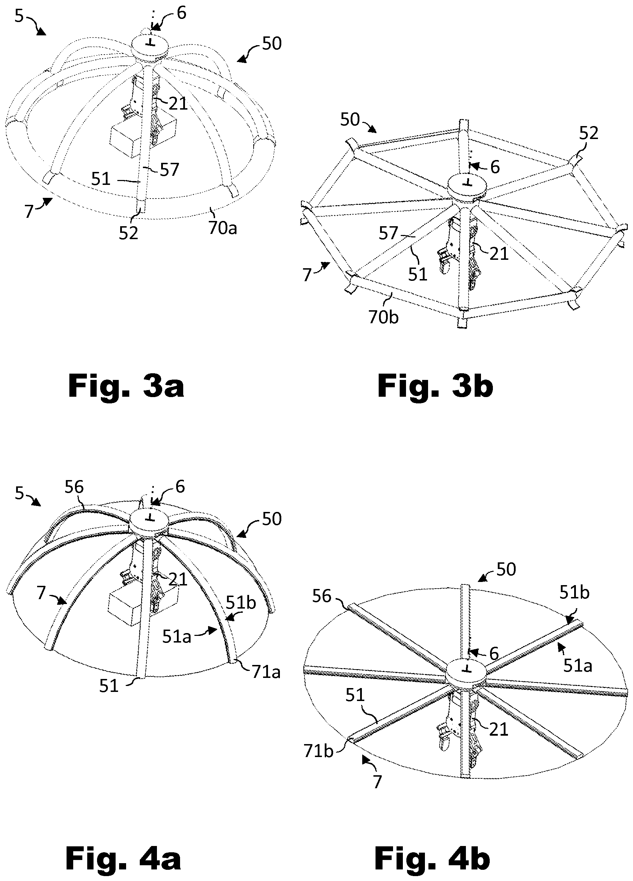

Dans une deuxième variante de l'armature 50 illustrée aux figures 3a et 3b, les rayons 51 sont réalisés par des vessies 57 sensiblement longitudinales et de section circulaire de diamètre allant de 2 à 5 cm.

La ou les vessies sont réalisées de préférence dans un matériau sensiblement extensible, ou autrement dit, comportant un taux d'allongement inférieur à 20%, et est remplie en permanence par un fluide, de préférence l'air, à une pression constante allant de 0,5 à 1 bar relatif.

De préférence, la longueur des rayons 51 est de 300 mm et encore plus préférentiellement de 400 mm. Augmenter la longueur des rayons permet d'obtenir une enveloppe de protection plus étendue ce qui permettrait éventuellement d'englober la zone de travail de l'effecteur 20 tout en maintenant le dispositif 5 de protection déployé. De plus, à rigidité équivalente, un rayon plus long se déformera plus amplement en cas de collision avec un opérateur et réduira ainsi davantage les risques de blessures.

Le dispositif de protection est à l'état déployé lorsque les rayons sont davantage courbés autour de l'effecteur. L'enveloppe de protection délimitée par l'armature est ainsi de forme sensiblement sphérique.

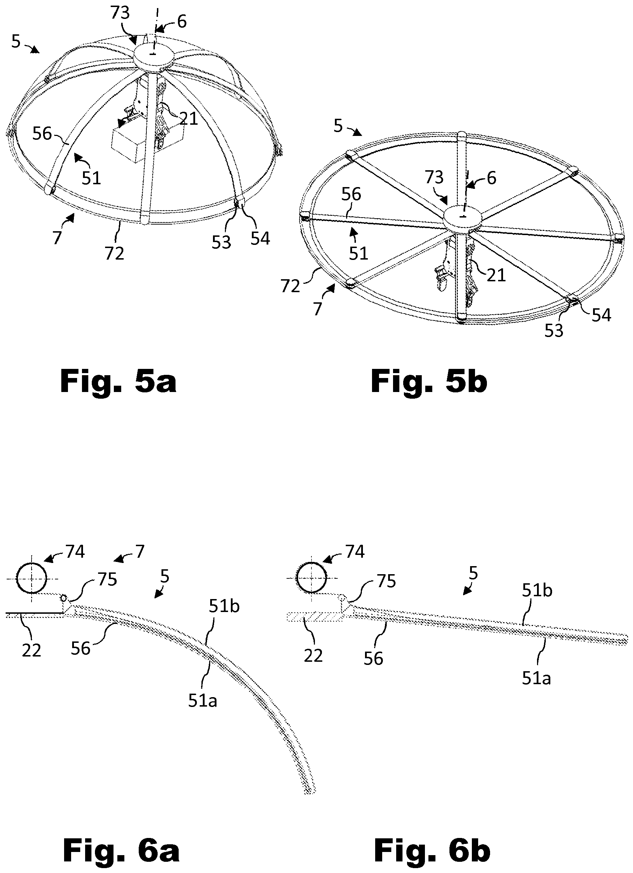

Fléchir davantage les rayons sous l'effet de l'actionneur 7 peut avoir pour effet de les courber plus ou de les courber moins. Autrement dit, les rayons 51 libres de toute sollicitions exercées par un actionneur, peuvent être courbés ou rectilignes. Ainsi, aux figures 1 à 5, les rayons 51 sont davantage courbés autour de l'effecteur 20 lorsqu'ils sont davantage fléchis, et moins courbés autour de l'effecteur lorsqu'ils sont moins fléchis. A l'inverse, à la figure 6, les rayons 51 sont moins courbés autour de l'effecteur lorsqu'ils sont davantage fléchis, et davantage courbés autour de l'effecteur lorsqu'ils sont moins fléchis.

Dans une première variante de l'actionneur 7 illustrée aux figures 1 à 3b, l'actionneur 7 comprend une vessie 70 de forme torique, de diamètres extérieur De et intérieur Di donnés, apte à être remplie par un fluide, ladite vessie reliant les extrémités libres des rayons 51, ladite vessie coopérant avec lesdits rayons de telle sorte que, lorsque la vessie 70a est davantage remplie, les rayons sont davantage fléchis, et lorsque la vessie 70b est moins remplie, les rayons sont moins fléchis.

Par vessie, on entend une poche étanche et malléable. Pour caractériser la forme donnée d'une vessie, on considère une vessie non assemblée à un quelconque dispositif et suffisamment remplie d'air pour que la pression interne la rigidifie et lui confère la forme donnée. On ne considère pas une vessie vidée ou insuffisamment remplie de telle sorte qu'elle soit malléable et informe, ou une vessie excessivement remplie de telle sorte que la matière constituant la vessie soit expansée.

La vessie 70 ceinture l'armature 50 et est reliée à l'extrémité libre des rayons 51, par des arceaux 52. La vessie se maintient dans le creux des arceaux. Les arceaux forment des demi-cercles de rayon donné de telle sorte que l'arceau est apte à loger la vessie remplie. A titre d'exemple, les arceaux peuvent également être des cerclages complets ceinturant la vessie et réalisés dans un matériau élastique afin de s'adapter à la forme de la vessie selon son remplissage. Vidée, la vessie 70b est malléable et ne présente pas de forme définie autre que celle que lui confèrent les arceaux, à savoir un contour sensiblement polygonal de section radiale aplatie sur les arceaux, chaque arceau réalisant un sommet du polygone.

Le remplissage de la vessie avec de l'air est assuré par un système 75 de gonflage situé à proximité du support 4 du bras manipulateur et alimentant la vessie par le faisceau 76. Le vidage de la vessie peut être assuré par un système de dégonflage réactif.

Le dispositif de protection peut se déployer autour de l'effecteur mais il peut également continuer à se rétracter en fléchissant davantage autour de la base 22. Afin que le dispositif de protection se déploie toujours autour de l'effecteur, les rayons 51 sont de préférence légèrement courbés autour de l'effecteur 20 lorsque le dispositif 5 de protection est à l'état rétracté.

On définit le diamètre intérieur Di de la vessie comme étant la distance la plus courte entre l'axe central du dispositif de protection et la vessie, et le diamètre extérieur De comme étant la distance la plus longue entre l'axe central du dispositif de protection et la vessie. Le diamètre intérieur de la vessie remplie est inférieur au diamètre d'un contour circulaire qui passe dans le creux des arceaux. Par conséquent, la vessie se remplissant exerce une contrainte sur les rayons 51 qui fléchissent.

A titre d'exemple, pour une armature 50 comportant quatre rayons 51 de 300 mm de longueur, la flèche maximale des rayons obtenue par l'action de la vessie 70 est de 150 mm, et pour une armature comportant 3 rayons, la flèche maximale est de 210 mm.

Dans une deuxième variante de l'actionneur illustrée aux figures 4a et 4b, l'actionneur 7 comprend une pluralité de vessies 71 de forme généralement courbée, une quelconque vessie étant fixée le long d'un quelconque rayon 51 sur la face extérieure 55b, ledit rayon coopérant avec ladite vessie de telle sorte que lorsque la vessie 71a est davantage remplie, elle est davantage rigide et le rayon est davantage fléchi, et lorsque la vessie 71b est moins remplie, elle est davantage souple et le rayon est moins fléchi. Les vessies 71 sont fixées le long de rayon qui est sensiblement rectiligne au repos.

On peut également, selon une troisième variante de l'actionneur non illustrée, fixées des vessies de forme généralement longitudinale sur la face intérieure 55a, ledit rayon coopérant avec ladite vessie de telle sorte que lorsque la vessie 71a est davantage remplie, elle est davantage rigide et le rayon est davantage fléchi, et lorsque la vessie 71b est moins remplie, elle davantage souple et le rayon est moins fléchi. Dans ce cas, les rayons au repos sont courbés autour de l'effecteur.

Dans une quatrième variante de l'actionneur illustrée aux figures 5a et 5b, l'actionneur 7 comprend un élément filaire 72 prenant de préférence la forme d'un collier. L'élément filaire 72 relie les extrémités libres des rayons 51. Les rayons 51 coopèrent avec l'élément filaire de telle sorte que, lorsque l'élément filaire est davantage tendu, les rayons sont davantage fléchis, et lorsque l'élément filaire est moins tendu, les rayons sont moins fléchis. De la même façon que pour la première variante de l'actionneur, les rayons sont de préférence, sensiblement courbés autour de l'effecteur 20 lorsque le dispositif de protection est à l'état rétracté.

L'élément filaire est mis en tension par un enrouleur 73 logé dans la base 22. L'élément filaire ceinture l'armature 50 et coulisse à l'extrémité libre des rayons 51 réalisées de préférence par des roulettes 54 à gorge. Les roulettes sont montées mobiles à pivotement perpendiculairement à la face extérieure de l'armature.

Dans une cinquième variante de l'actionneur illustrée aux figures 6a et 6b, l'actionneur 7 comprend une pluralité d'éléments filaires 75, un quelconque élément filaire étant fixé à une de ses extrémités à l'extrémité libre d'un quelconque rayon 51 et coulissant le long dudit rayon sur la face extérieure 55b, ledit rayon coopérant avec ledit élément filaire de telle sorte que, lorsque l'élément filaire est davantage tendu, le rayon est davantage fléchi, et lorsque l'élément filaire est moins tendu, le rayon est moins fléchi.

On peut également, selon une sixième variante de l'actionneur non illustrée, faire coulisser ledit élément filaire le long dudit rayon sur la face intérieure 55b dans une gorge ou des arceaux, ledit rayon coopérant avec ledit élément filaire de telle sorte que, lorsque l'élément filaire est davantage tendu, le rayon est davantage fléchi, et lorsque l'élément filaire est moins tendu, le rayon est moins fléchi. Les rayons 51 sont davantage courbés autour de l'effecteur 20, en l'absence de sollicitions de l'actionneur, lorsque le dispositif 5 de protection déployé. Dans ce cas, les rayons sont sensiblement rectilignes en l'absence de sollicitions.

Le dispositif 5 de protection comprend une membrane 55 extensible solidaire de l'armature et qui enveloppe l'armature.

Par exemple, au moins un capteur de proximité de type capacitif peut être disposé sur le dispositif 5 de protection et plus précisément sur l'armature 50, sur la ou les vessies et la membrane. Ainsi, le dispositif effecteur peut détecter plus tôt la présence éventuelle de l'opérateur sur la trajectoire de l'effecteur et stopper son déplacement. De préférence, un réseau de plusieurs capteurs de proximité de type capacitif est installé sur le dispositif de protection.

Lorsque des capteurs de proximité de type capacitif sont disposés sur un dispositif de sécurité prenant la forme d'une vessie gonflée d'air ou de gaz, leur fonctionnement, et notamment leur portée de détection, est améliorée. En effet, en étant ainsi positionnés, les capteurs sont suffisamment éloignés de toute masse métallique, de toute liaison électrique ou d'un dispositif électrique tel un moteur du bras manipulateur, susceptible de perturber leur fonctionnement, et plus particulièrement le champ électrique qu'ils émettent.

Le dispositif 10 effecteur sert à la réalisation de tâches de manières automatisées, dans un espace de travail partagé avec un opérateur.

Le dispositif 5 de protection est déployé. Le dispositif 10 effecteur déplace amplement l'effecteur 20 à l'aplomb d'une première zone de travail.

Le dispositif de protection est rétracté et l'effecteur réalise une ou plusieurs tâches. Le dispositif effecteur déplace légèrement l'effecteur.

Lorsque l'ensemble des tâches sont réalisées sur la première zone de travail, le dispositif de protection est déployé et le dispositif 10 effecteur déplace amplement l'effecteur 20 à l'aplomb d'une deuxième zone de travail.

D'autres variantes et modes de réalisation de l'invention peuvent être envisagés sans sortir du cadre de ses revendications.

Ainsi, les variantes 2 et 3 de l'actionneur et les variantes 5 et 6 de l'actionneur peuvent être combinées pour réaliser un actionneur double effet.

## Revendications

1. Dispositif (10) effecteur apte à être déplacé ou orienté par un système automatisé tel un bras (2) manipulateur, le dispositif effecteur comprenant une base (22), un effecteur (20) s'étendant depuis la base (22) le long d'un axe (6) longitudinal, et un dispositif (5) de protection passant au moyen d'un actionneur (7) d'un état rétracté à un état déployé autour de l'effecteur et vice versa, le dispositif de protection étant fixé sur ladite base de manière à être déplacé et/ou orienté avec l'effecteur, le dispositif effecteur étant **caractérisé en ce que** le dispositif (5) de protection comprend une armature (50) flexible, le dispositif de protection passant sous l'effet de la flexion de l'armature d'un état rétracté à un état déployé autour de l'effecteur (20) ou, d'un état déployé autour de l'effecteur à un état rétracté, et **en ce que** l'actionneur (7) coopère avec l'armature (50) de telle sorte que, lorsque l'actionneur passe d'un premier à un second état, l'armature est davantage fléchie, et lorsque l'actionneur passe du second au premier état, l'armature est moins fléchie.

2. Dispositif selon la revendication précédente, dans lequel l'actionneur (7) prend la forme d'un actionneur simple effet.

3. Dispositif selon l'une des revendications précédentes, dans lequel l'armature (50) comprend au moins trois rayons (51) flexibles qui s'étendent radialement depuis l'axe (6), lesdits rayons comportant une face intérieure (5 1a) et une face extérieure (51b), et qui coopèrent avec l'actionneur (7) de telle sorte que, lorsque l'actionneur passe d'un premier à un second état, les rayons sont davantage fléchis, et lorsque l'actionneur passe du second au premier état, les rayons sont moins fléchis.

4. Dispositif selon la revendication 3, dans lequel le dispositif (5) de protection est à l'état déployé lorsque les rayons sont davantage courbés autour de l'effecteur (20).

5. Dispositif selon la revendication 3 ou 4, dans lequel les rayons (51) sont davantage courbés autour de l'effecteur (20) lorsqu'ils sont davantage fléchis, et moins courbés autour de l'effecteur lorsqu'ils sont moins fléchis.

6. Dispositif selon la revendication 3 ou 4, dans lequel les rayons (51) sont moins courbés autour de l'effecteur (20) lorsqu'ils sont davantage fléchis, et davantage courbés autour de l'effecteur lorsqu'ils sont moins fléchis.

7. Dispositif selon la revendication 5, dans lequel l'actionneur (7) comprend une vessie (70) de forme torique, apte à être remplie par un fluide, ladite vessie reliant les extrémités libres des rayons (51), ladite vessie coopérant avec lesdits rayons de telle sorte que, lorsque la vessie (70a) est davantage remplie, les rayons sont davantage fléchis, et lorsque la vessie (70b) est moins remplie, les rayons sont moins fléchis.

8. Dispositif selon la revendication 5, dans lequel l'actionneur (7) comprend une pluralité de vessies (71), aptes à être remplies par un fluide, une vessie étant fixée le long de la face extérieure (51b) d'un rayon (51), ladite vessie coopérant avec ledit rayon de telle sorte que lorsque la vessie (71a) est davantage remplie, elle est davantage rigide et courbée et le rayon est davantage fléchi, et lorsque la vessie (71b) est moins remplie, elle est davantage souple et droite et le rayon est moins fléchi.

9. Dispositif selon la revendication 6, dans lequel l'actionneur (7) comprend une pluralité de vessies (71), aptes à être remplies par un fluide, une vessie étant fixée le long de la face intérieure (51a) d'un rayon (51), ladite vessie coopérant avec ledit rayon de telle sorte que lorsque la vessie (71a) est davantage remplie, elle est davantage rigide et droite et le rayon est davantage fléchi, et lorsque la vessie (71b) est moins remplie, elle est davantage souple et courbée et le rayon est moins fléchi.

10. Dispositif selon la revendication 8 ou 9, dans lequel, la vessie (71) comprenant au moins deux parties, une première partie de la vessie est réalisée dans un matériau extensible et une deuxième partie de la vessie est réalisée dans un matériau sensiblement inextensible.

11. Dispositif selon la revendication 5, dans lequel l'actionneur (7) comprend un élément filaire (72) reliant les extrémités libres des rayons (51), ledit élément filaire coopérant avec lesdits rayons (51) de telle sorte que, lorsque l'élément filaire est davantage tendu, les rayons sont davantage fléchis, et lorsque l'élément filaire est moins tendu, les rayons sont moins fléchis.

12. Dispositif selon la revendication 7 ou 11, dans lequel les rayons (51) sont sensiblement courbés autour de l'effecteur (20) lorsque le dispositif (5) de protection est à l'état rétracté.

13. Dispositif selon la revendication 6, dans lequel l'actionneur (7) comprend une pluralité d'éléments filaires (75), un élément filaire étant fixé à une de ses extrémités à l'extrémité libre d'un rayon (51) et coulissant le long de la face extérieure (51b) dudit rayon, ledit élément filaire coopérant avec ledit rayon de telle sorte que, lorsque l'élément filaire est davantage tendu, le rayon est davantage fléchi, et lorsque l'élément filaire est moins tendu, le rayon est moins fléchi.

14. Dispositif selon la revendication 5, dans lequel l'actionneur (7) comprend une pluralité d'éléments filaires (75), un élément filaire étant fixé à une de ses extrémités à l'extrémité libre d'un rayon (51) et coulissant le long de la face intérieure (51a) dudit rayon, ledit élément filaire coopérant avec ledit rayon de telle sorte que, lorsque l'élément filaire est davantage tendu, le rayon est davantage fléchi, et lorsque l'élément filaire est moins tendu, le rayon est moins fléchi.

15. Dispositif selon l'une quelconque des revendications précédentes, **caractérisé en ce que** le dispositif (5) de protection comprend une membrane (55) extensible solidaire de l'armature et qui enveloppe l'armature.

## Patentansprüche

1. Effektorvorrichtung (10), die geeignet ist, von einem automatisierten System wie einem Manipulatorarm (2) bewegt oder ausgerichtet zu werden, wobei die Effektorvorrichtung eine Basis (22), einen Effektor (20), der sich von der Basis (22) entlang einer Längsachse (6) erstreckt, und eine Schutzvorrichtung (5) umfasst, die mittels eines Aktors (7) von einem eingezogenen Zustand zu einem um den Effektor herum ausgebreiteten Zustand wechselt und umgekehrt, wobei die Schutzvorrichtung so auf der Basis befestigt ist, dass sie mit dem Effektor bewegt und/oder ausgerichtet werden kann, wobei die Effektorvorrichtung **dadurch gekennzeichnet ist, dass** die Schutzvorrichtung (5) eine flexible Armatur (50) umfasst, wobei die Schutzvorrichtung unter der Wirkung der Biegung der Armatur von einem eingezogenen Zustand zu einem um den Effektor (20) herum ausgebreiteten Zustand oder von einem um den Effektor herum ausgebreiteten Zustand zu einem eingezogenen Zustand wechselt, und dadurch, dass der Aktor (7) so mit der Armatur (50) zusammenwirkt, dass die Armatur stärker gebogen ist, wenn der Aktor von einem ersten zu einem zweiten Zustand wechselt, und die Armatur weniger gebogen ist, wenn der Aktor vom zweiten zum ersten Zustand wechselt.

2. Vorrichtung nach dem vorhergehenden Anspruch, wobei der Aktor (7) die Form eines einfach wirkenden Aktors annimmt.

3. Vorrichtung nach einem der vorhergehenden Ansprüche, wobei die Armatur (50) wenigstens drei flexible Speichen (51) umfasst, die sich radial von der Achse (6) erstrecken, wobei die Speichen eine Innenseite (51a) und eine Außenseite (51b) umfassen, und die so mit dem Aktor (7) zusammenwirken, dass die Speichen stärker gebogen sind, wenn der Aktor von einem ersten zu einem zweiten Zustand wechselt, und die Speichen weniger gebogen sind, wenn der Aktor vom zweiten zum ersten Zustand wechselt.

4. Vorrichtung nach Anspruch 3, wobei sich die Schutzvorrichtung (5) im ausgebreiteten Zustand befindet, wenn die Speichen stärker um den Effektor (20) gekrümmt sind.

5. Vorrichtung nach Anspruch 3 oder 4, wobei die Speichen (51) stärker um den Effektor (20) gekrümmt sind, wenn sie stärker gebogen sind, und weniger um den Effektor gekrümmt sind, wenn sie weniger gebogen sind.

6. Vorrichtung nach Anspruch 3 oder 4, wobei die Speichen (51) weniger um den Effektor (20) gekrümmt sind, wenn sie stärker gebogen sind, und stärker um den Effektor gekrümmt sind, wenn sie weniger gebogen sind.

7. Vorrichtung nach Anspruch 5, wobei der Aktor (7) eine torusförmig Blase (70) umfasst, die geeignet ist, mit einem Fluid gefüllt zu sein, wobei die Blase die freien Enden der Speichen (51) verbindet, wobei die Blase so mit den Speichen zusammenwirkt, dass die Speichen stärker gebogen sind, wenn die Blase (70a) mehr gefüllt ist, und die Speichen weniger gebogen sind, wenn die Blase (70b) weniger gefüllt ist.

8. Vorrichtung nach Anspruch 5, wobei der Aktor (7) eine Mehrzahl von Blasen (71) umfasst, die geeignet sind, mit einem Fluid gefüllt zu sein, wobei eine Blase entlang der Außenseite (51b) einer Speiche (51) befestigt ist, wobei die Blase so mit der Speiche zusammenwirkt, dass, wenn die Blase (71a) mehr gefüllt ist, sie steifer und gekrümmter ist und die Speiche stärker gebogen ist, und wenn die Blase (71b) weniger gefüllt ist, sie nachgiebiger und gerader ist und die Speiche weniger gebogen ist.

9. Vorrichtung nach Anspruch 6, wobei der Aktor (7) eine Mehrzahl von Blasen (71) umfasst, die geeignet sind, mit einem Fluid gefüllt zu sein, wobei eine Blase entlang der Innenseite (51a) einer Speiche (51) befestigt ist, wobei die Blase so mit der Speiche zusammenwirkt, dass, wenn die Blase (71a) mehr gefüllt ist, sie steifer und gerader ist und die Speiche stärker gebogen ist, und wenn die Blase (71b) weniger gefüllt ist, sie nachgiebiger und gekrümmter ist und die Speiche weniger gebogen ist.

10. Vorrichtung nach Anspruch 8 oder 9, wobei, die Blase (71) umfassend wenigstens zwei Abschnitte, ein erster Abschnitt der Blase aus einem dehnbaren Material und ein zweiter Abschnitt der Blase aus einem im Wesentlichen undehnbaren Material hergestellt ist.

11. Vorrichtung nach Anspruch 5, wobei der Aktor (7) ein fadenartiges Element (72) umfasst, das die freien Enden der Speichen (51) verbindet, wobei das fadenartige Element so mit den Speichen (51) zusammenwirkt, dass die Speichen stärker gebogen sind, wenn das fadenartige Element stärker gespannt ist, und die Speichen weniger gebogen sind, wenn das fadenartige Element weniger gespannt ist.

12. Vorrichtung nach Anspruch 7 oder 11, wobei die Speichen (51) im Wesentlichen um den Effektor (20) herum gekrümmt sind, wenn sich die Schutzvorrichtung (5) im eingezogenen Zustand befindet.

13. Vorrichtung nach Anspruch 6, wobei der Aktor (7) eine Mehrzahl von fadenartigen Elementen (75) umfasst, wobei ein fadenartiges Element an einem seiner Enden am freien Ende einer Speiche (51) befestigt ist und an der Außenseite (51b) der Speiche entlang gleitet, wobei das fadenartige Element so mit der Speiche zusammenwirkt, dass die Speiche stärker gebogen ist, wenn das fadenartige Element stärker gespannt ist, und die Speiche weniger gebogen ist, wenn das fadenartige Element weniger gespannt ist.

14. Vorrichtung nach Anspruch 5, wobei der Aktor (7) eine Mehrzahl von fadenartigen Elementen (75) umfasst, wobei ein fadenartiges Element an einem seiner Enden am freien Ende einer Speiche (51) befestigt ist und an der Innenseite (51a) der Speiche entlang gleitet, wobei das fadenartige Element so mit der Speiche zusammenwirkt, dass die Speiche stärker gebogen ist, wenn das fadenartige Element stärker gespannt ist, und die Speiche weniger gebogen ist, wenn das fadenartige Element weniger gespannt ist.

15. Vorrichtung nach einem der vorhergehenden Ansprüche, **dadurch gekennzeichnet, dass** die Schutzvorrichtung (5) eine dehnbare Membran (55) umfasst, die fest mit der Armatur verbunden ist und die Armatur umhüllt.

## Claims

1. Effector device (10) able to be moved or oriented by an automated system such as a manipulator arm (2), the effector device comprising a base (22), an effector (20) extending from the base (22) along a longitudinal axis (6), and a protective device (5) passing, by means of an actuator (7), from a retracted state to a state in which it is deployed around the effector, and vice versa, the protective device being fixed to the said base in such a way as to be moved and/or oriented with the effector, the effector device being **characterized in that** the protective device (5) comprises a flexible framework (50), the protective device passing, under the effect of the bending of the framework, from a retracted state to a state in which it is deployed around the effector (20) or from a state in which it is deployed around the effector to a retracted state, and **in that** the actuator (7) collaborates with the framework(50) in such a way that when the actuator passes from a first to a second state, the framework is bent further, and when the actuator passes from the second to the first state, the framework is not bent as much.

2. Device according to the preceding claim, in which the actuator (7) takes the form of a single-acting actuator.

3. Device according to one of the preceding claims, in which the framework (50) comprises at least three flexible spokes (51) which extend radially from the axis (6), the said spokes comprising an interior face (51a) and an exterior face (51b), and which collaborate with the actuator (7) in such a way that when the actuator passes from a first to a second state, the spokes are bent further, and when the actuator passes from the second to the first state, the spokes are not bent as much.

4. Device according to Claim 3, in which the protective device (5) is in the deployed state when the spokes are more curved around the effector (20).

5. Device according to Claim 3 or 4, in which the spokes (51) are more curved around the effector (20) when they are more bent, and are less curved around the effector when they are not bent as much.

6. Device according to Claim 3 or 4, in which the spokes (51) are less curved around the effector (20) when they are more bent, and are more curved around the effector when they are not bent as much.

7. Device according to Claim 5, in which the actuator (7) comprises a bladder (70) of toric shape, able to be filled with a fluid, the said bladder connecting the free ends of the spokes (51), the said bladder collaborating with the said spokes in such a way that when the bladder (70a) is filled further, the spokes are bent more, and when the bladder (70b) is not filled as much, the spokes are not bent as much.

8. Device according to Claim 5, in which the actuator (7) comprises a plurality of bladders (71) which are able to be filled with a fluid, one bladder being fixed along the exterior face (51b) of one spoke (51), the said bladder collaborating with the said spoke in such a way that when the bladder (71a) is filled more, it is more rigid and curved and the spoke is bent more, and when the bladder (71b) is less filled, it is more soft and straight and the spoke is not bent as much.

9. Device according to Claim 6, in which the actuator (7) comprises a plurality of bladders (71) which are able to be filled with a fluid, one bladder being fixed along the interior face (51a) of one spoke (51), the said bladder collaborating with the said spoke in such a way that when the bladder (71a) is filled more, it is more rigid and straight and the spoke is bent more, and when the bladder (71b) is less filled, it is more soft and curved and the spoke is not bent as much.

10. Device according to Claim 8 or 9, in which, with the bladder (71) comprising at least two parts, a first part of the bladder is made of an extendable material, and a second part of the bladder is made of a substantially non-extendable material.

11. Device according to Claim 5, in which the actuator (7) comprises a filamentary element (72) connecting the free ends of the spokes (51), the said filamentary element collaborating with the said spokes (51) in such a way that when the filamentary element is more taut, the spokes are bent more, and when the filamentary element is less taut, the spokes are not bent as much.

12. Device according to Claim 7 or 11, in which the spokes (51) are substantially curved around the effector (20) when the protective device (5) is in the retracted state.

13. Device according to Claim 6, in which the actuator (7) comprises a plurality of filamentary elements (75), one filamentary element being fixed at one of its ends to the free end of a spoke (51) and sliding along the exterior face (51b) of the said spoke, the said filamentary element collaborating with the said spoke in such a way that when the filamentary element is more taut, the spoke is bent more, and when the filamentary element is less taut, the spoke is not bent as much.

14. Device according to Claim 5, in which the actuator (7) comprises a plurality of filamentary elements (75), one filamentary element being fixed at one of its ends to the free end of a spoke (51) and sliding along the interior face (5 1a) of the said spoke, the said filamentary element collaborating with the said spoke in such a way that when the filamentary element is more taut, the spoke is bent more, and when the filamentary element is less taut, the spoke is not bent as much.

15. Device according to any one of the preceding claims, **characterized in that** the protective device (5) comprises an extendable membrane (55) attached to the framework and which envelops the framework.
